# EUROPEAN PATENT SPECIFICATION

(11) **EP 3 695 540 B1**
(45) Date of publication and mention of the grant of the patent: **28.06.2023**
(21) Application number: 18796111.5
(22) Date of filing: 08.10.2018
(51) Int. Cl.: H04L 1/18

(54) **CHANGING PHYSICAL UPLINK CONTROL CHANNEL (PUCCH) RESOURCE**
ÄNDERUNG EINER RESSOURCE MIT PHYSISCHEM UPLINK-STEUERKANAL (PUCCH)
CHANGEMENT DE RESSOURCE DE CANAL DE COMMANDE DE LIAISON MONTANTE PHYSIQUE (PUCCH)

(30) Priority: 10.10.2017 US 201762570244 P
(43) Date of publication of application: 19.08.2020
(73) Proprietor: Telefonaktiebolaget LM Ericsson (publ), 164 83 Stockholm (SE)
(72) Inventor: BALDEMAIR, Robert, 170 69 Solna (SE); CHEN LARSSON, Daniel, 226 49 Lund (SE)
(74) Representative: Ericsson
(86) International application number: PCT/IB2018/057781
(87) International publication number: WO 2019/073357

(56) References cited:
- EP-A1- 2 262 340
- CMCC: "Subband-based resource allocation for NR PUCCH", 3GPP DRAFT; R1-1717888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051341072, Retrieved from the Internet: URL:http://www.3gpp.org/ftp/Meetings_3GPP_ SYNC/RAN1/Docs/ [retrieved on 2017-10-08]
- NOKIA ET AL: "PUCCH Resource Allocation", 3GPP DRAFT; R1-1718311_PUCCH RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051341493, Retrieved from the Internet: URL:http://www.3gpp.org/ftp/Meetings_3GPP_ SYNC/RAN1/Docs/ [retrieved on 2017-10-08]

## Description

### TECHNICAL FIELD

Certain embodiments of the present disclosure relate to wireless networks and, more particularly, to changing a PUCCH resource.

### BACKGROUND

### Carrier aggregation

In carrier aggregation (CA), multiple component carriers (CCs) are configured for one user equipment (UE). Component carriers can be configured into PUCCH groups. Hybrid Automatic Repeat Request (HARQ) feedback for all component carriers of a PUCCH group are transmitted on the same uplink (UL) using PUCCH or uplink control information (UCI) on physical uplink shared channel (PUSCH).

### HARQ codebook

The acknowledgement/not-acknowledgement (ACK/NACK) bits which should be reported on a single PUCCH are arranged into the HARQ codebook. A HARQ codebook can contain ACK/NACK bits from the same or different component carriers and from one or multiple time instances. New Radio (NR) defines mini-slots and mixing of multiple numerologies on one carrier, and both features can lead to irregular transmission timings complicating the HARQ codebook design. NR also introduces HARQ feedback per group of code blocks of a transport block, a feature called Code Block Group (CBG) feedback. The CBG size can range from one code block per CBG to one CBG per transport block (same as in long term evolution (LTE)). CBG-based HARQ feedback can substantially increase the amount of HARQ feedback signaling

### Semi-statically configured HARQ codebook

In a semi-statically configured HARQ codebook, at least the number of bits in the component carrier dimension is typically fixed. As soon as the UE detects at least one downlink (DL) assignment on any component carrier, the UE prepares a feedback bitmap that contains HARQ feedback of all configured or activated component carriers. Feedback for component carriers where no DL assignment has been detected is set to NACK. The number of feedback bits required for one component carrier is given by its multiple input multiple output (MIMO) configuration and its CBG configuration. The number of HARQ feedback bits required for all configured/activated component carriers is the sum across all configured/activated component carrier of the feedback bits required per component carrier.

The number of entries in the time-domain can also be fixed or feedback is only reported for those time instances where at least one DL assignment is detected (on any of the configured/activated component carriers). In the latter case, a DAI (Downlink Assignment Index or Downlink Assignment Indicator) is needed to protect against missed DL assignments. A DAI is contained in preferably all DL assignments and contains the number of time instances (e.g., slots) that have been scheduled up to (including) the current slot.

A semi-statically configured HARQ codebook is simple and robust but can lead to high overhead, especially if there are many component carriers and often not all of them are scheduled and/or some component carriers are configured with CBG.

### Dynamic HARQ codebook

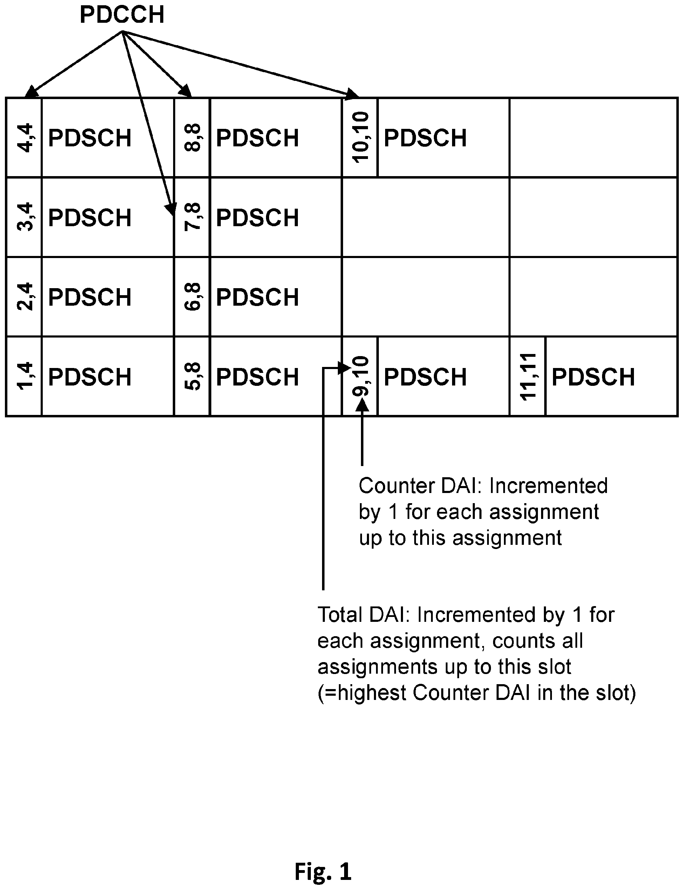

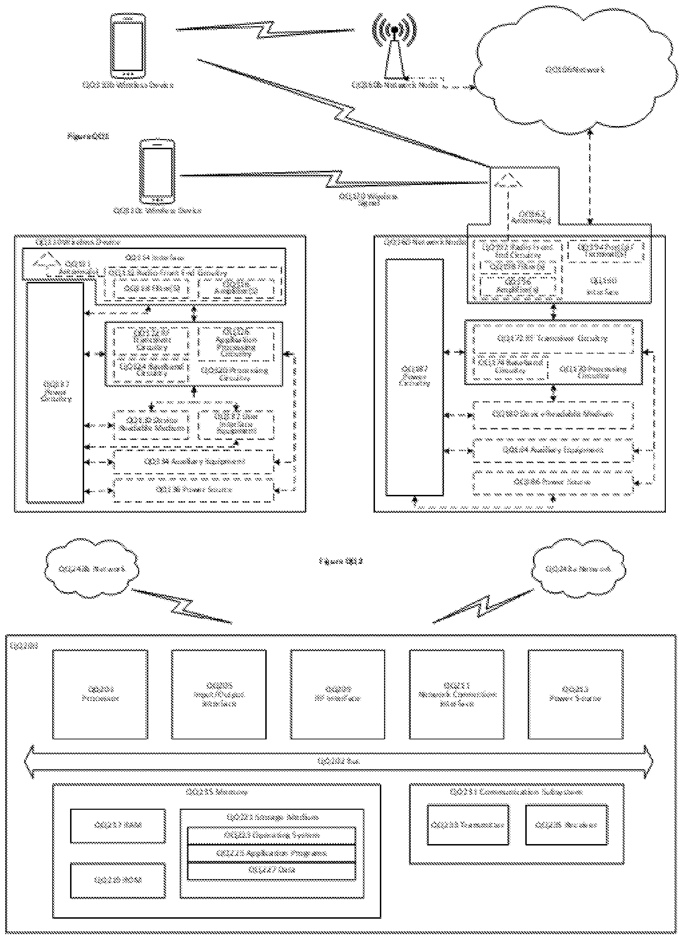

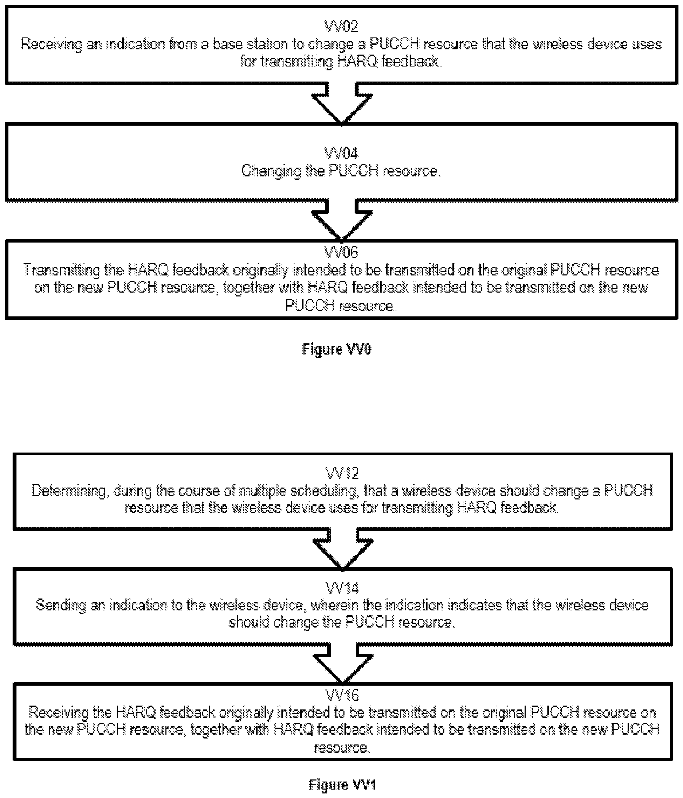

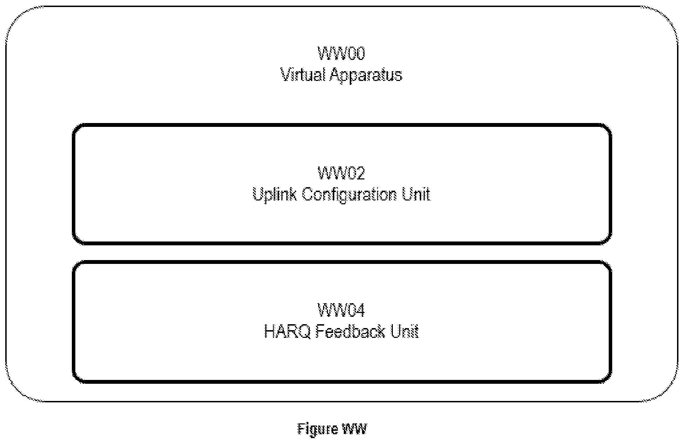

LTE Rel-13 supports a very large number of aggregated component carriers. A semi-static configured (in component carrier dimension) HARQ codebook as it has been used in earlier carrier aggregation is sub-optimal because, for the semi-statically configured HARQ codebook, feedback of all configured/activated component carriers is always included. With a large number of configured/activated but only a few scheduled component carriers, the HARQ codebook size becomes unnecessarily large. In Rel-13, a dynamic HARQ codebook (in both component carrier and time dimension) has been introduced. Here each DL assignment (typically a DL assignment is carried in downlink control information (DCI)) contains a counter and total DAI field. The counter DAI field counts the number of DL assignments that has been scheduled so far (including the current DL assignment) for the current HARQ codebook. The component carriers are ordered (e.g., according to carrier frequency) and the counter DAI counts DL assignments in this order. Along the time axis the counter DAI is not reset (the counter is increased continuously at slot boundaries). The total DAI in each DL assignment is set to the total number of DL assignments that have been scheduled so far (including the current slot) for the current HARQ codebook. The total DAI in a slot is thus set to the highest counter DAI of the slot. To save overhead, a modulo operation (often mod 2) is often applied to the counter and total DAI which can then be expressed with a few bits, e.g., 2 bit for mod-2. The counter/total DAI mechanism enables the receiver to recover the HARQ codebook size as well as indexing into the HARQ codebook if few contiguous DL assignments are missed. Figure 1 provides an example of counter DAI and total DAI. For simplicity, no modulo operation has been applied in the illustration.

### PUCCH

PUCCH can carry ACK/NACK (feedback related to HARQ), uplink control information (UCI), scheduling request (SR), or beam related information. NR defines a variety of different PUCCH formats. The available PUCCH formats can be grouped into short and long PUCCH formats.

### Short PUCCH

Certain types of short PUCCH are ≤2 bits, and other types of short PUCCH are >2 bits. Short PUCCH can be configured at any symbols within a slot. While short PUCCH resources are typically configured toward the end of a slot interval for slot-based transmissions, PUCCH resources distributed over a slot or early within a slot interval can be used for scheduling requests or PUCCH signaling in response to mini-slots

PUCCH for ≤2 bit uses sequence selection. In sequence selection the input bit(s) selects one of the available sequences and the input information is presented by the selected sequence; e.g., 2 sequences are required for 1 bit and 4 sequences are required for 2 bit. This PUCCH can either span 1 or 2 symbols. In the case of 2 symbols, the same information is transmitted in a second symbol, potentially with another set of sequences (sequence hopping to randomize interference) and at another frequency (to achieve frequency-diversity).

PUCCH for >2 bit uses 1 or 2 symbols. In the case of 1 symbol, Demodulation Reference Signal (DM-RS) and uplink control information (UCI) payload carrying subcarriers are interleaved. The UCI payload is prior mapping to subcarriers encoded (either using Reed Muller codes or Polar codes, depending on the payload). In the case of 2 symbols, the encoded UCI payload is mapped to both symbols. For the 2-symbol PUCCH, typically the code rate is halved (in two symbols twice as many coded bits are available) and the second symbol is transmitted at a different frequency (to achieve frequency-diversity).

### Long PUCCH

Certain types of long PUCCH are ≤ 2 bits, and other types of long PUCCH are >2 bits. Both variants exist with variable length ranging from 4 to 14 and can even be aggregated across multiple slots. Long PUCCH can occur at multiple positions within a slot. The placements that are possible for the long PUCCH can increase or decrease depending on the PUCCH length. Long PUCCH can be configured with or without frequency-hopping (the latter has the advantage of frequency-diversity).

Long PUCCH for ≤2 bit is similar to PUCCH format 1a/1b in LTE with the exception that DM-RS are placed differently and the variable-length property.

Long PUCCH for >2 bit uses Time Division Multiple Access (TDMA) between Demodulation Reference Signal (DM-RS) and UCI-carrying symbols. UCI payload is encoded (either using Reed Muller codes or Polar codes, depending on the payload), mapped to modulation symbols (typically Quadrature Phase Shift Keying (QPSK) or pi/2 Binary Phase Shift Keying (BPSK)), Discrete Fourier Transform (DFT)-precoded to reduce Peak to Average Power Ratio (PAPR), and mapped to allocated subcarriers for Orthogonal frequency-division multiplexing (OFDM) transmission.

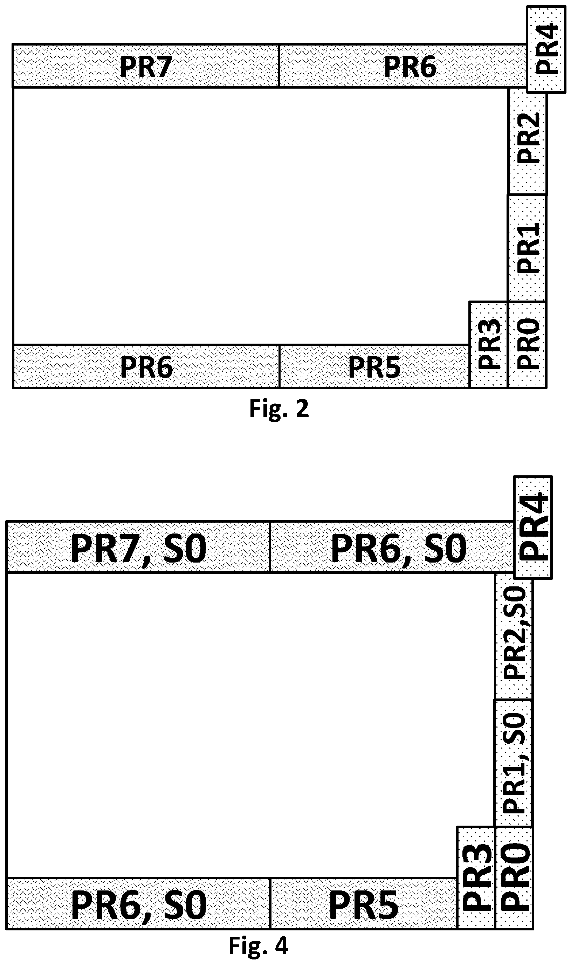

A UE can be configured with multiple PUCCH formats, and the PUCCH formats may be of the same or different type. Small payload PUCCH formats are needed if a UE is scheduled only with 1 or 2 DL assignments while a large payload format is needed if the UE is scheduled with multiple DL assignments. Long PUCCH formats are also needed for better coverage. For example, a UE could be configured with a short PUCCH for ≤2 bit and a long PUCCH for >2 bit. A UE in very good coverage could even use a short PUCCH format for >2 bit while a UE in less good coverage requires a long PUCCH format (even for ≤2 bit). Figure 2 depicts an example of PUCCH formats configured to a UE. The UE in Figure 2 is configured with multiple long and short PUCCH formats. Resource PR4 is illustrated slightly outside to indicate that it overlaps PR2 and PR6.

### PUCCH resource assignment

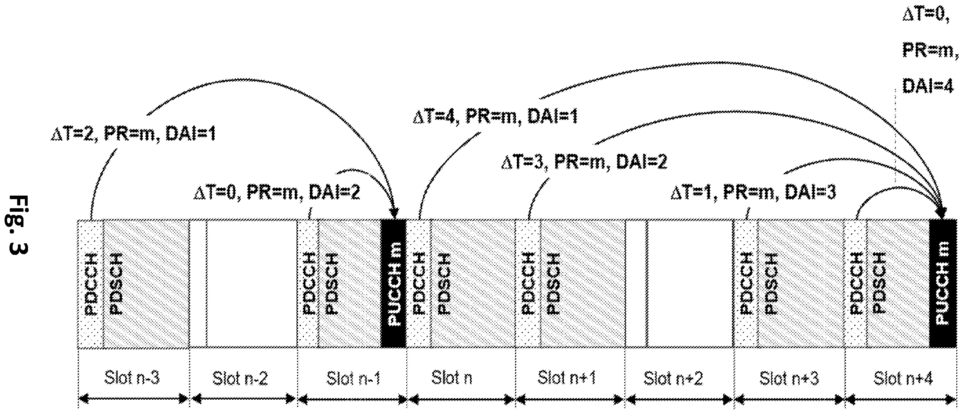

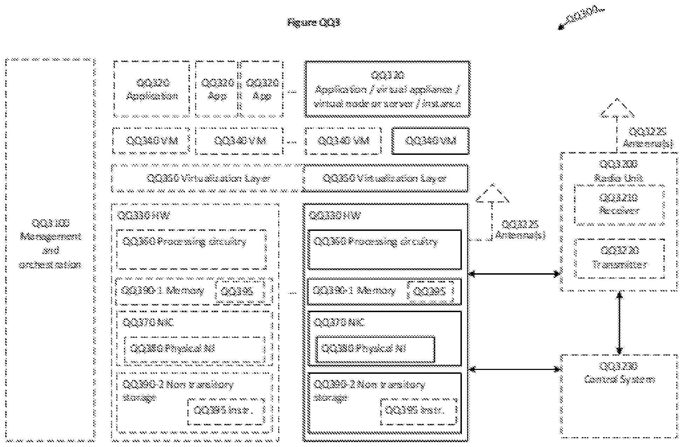

NR supports dynamic indication of PUCCH resource and time. As said above, the HARQ codebook carried by PUCCH can contain HARQ feedback from multiple physical downlink shared channel (PDSCH) (from multiple time instances and/or component carriers). PUCCH resource and time will be indicated in the scheduling DL assignment in case of a dynamic scheduled transmission. The association between PDSCH and PUCCH can be based on the PUCCH resource (PR) and time indicated in the scheduling DCI (ΔT); HARQ feedback of all PDSCHs which scheduling DCIs indicate the same PUCCH resource and time are reported together in the same HARQ codebook. The latest PDSCH that can be included is limited by the processing time the UE needs to prepare HARQ feedback. Figure 3 provides an example of HARQ feedback association. In the example of Figure 3, the case without carrier aggregation is shown. Figure 3 shows that the UE can report HARQ feedback on a short PUCCH in the same slot. The earliest PDSCH to include in the HARQ codebook for a given PUCCH resource is the first scheduled PDSCH after the time window of the last transmitted same PUCCH resource has been expired (in Figure 3, PDSCH of slot n-1 is reported on PUCCH resource m of slot n-1; PDSCH from slot n is therefore the first PDSCH to include in the HARQ codebook transmitted on PUCCH resource m in slot n+4).

To avoid wrong HARQ codebook sizes and wrong indexing into the HARQ codebook, a DAI is included in each DL assignment that counts DL assignments up to (including) the current DL assignment. In case of carrier aggregation, a counter and total DAI are needed as outlined above with respect to the discussion of Dynamic HARQ codebook.

EP 2262340 A1 describes radio resource selection including adjustment of an uplink radio resource. If an uplink radio resource (PUCCH) to be allocated is already used by a different mobile station UE, the uplink resources collide.

"Subband-based resource allocation for NR PUCCH", CMCC, 3GPP draft R1-1717888 and "PUCCH Resource Allocation", Nokia et al, 3GPP draft R1-1718311 describe PUCCH resource allocation.

### SUMMARY

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. There currently exist certain challenge(s). For example, in Figure 3, the PUCCH resource that should be used in slot n+4 needs to be determined at the time when the first DL assignment that should use this PUCCH is scheduled; in the shown example in slot n. Such forward looking during scheduling complicates scheduler operation. If the scheduler incorrectly "guesses" the needed PUCCH format/size in slot n (e.g., guessing too big causes bad performance, but guessing too small means the scheduler cannot schedule as desired) there is currently no possibility to change the assigned PUCCH resource. If in Figure 3 a new PUCCH resource would be indicated (e.g., in slot n+3), the UE would not know that HARQ feedback for slot n and n+1 should also be sent on the new PUCCH resource. It is therefore a problem that a once indicated PUCCH resource cannot be changed.

Certain aspects of the present disclosure and their embodiments may provide solutions to these or other challenges. For example, according to certain embodiments, PUCCH resources are grouped (either implicitly or explicitly), and an assigned PUCCH resource can be changed to another PUCCH resource in the same set. If the PUCCH resource is in the same set, the UE is aware that is should report HARQ feedback already collected for the originally indicated PUCCH resource together with the HARQ feedback for the current DL assignment that also contains the new PUCCH resource.

Certain embodiments disclose methods how a UE can switch to a new PUCCH resource after it initially received a different PUCCH resource indication. The provided methods ensure that HARQ feedback originally intended to be transmitted on the first PUCCH resource is transmitted on the new PUCCH resource, together with HARQ feedback intended to be transmitted on the new PUCCH resource.

There are, proposed herein, various embodiments which address one or more of the issues disclosed herein.

According to certain embodiments, a method is performed by a wireless device for transmitting HARQ feedback to a base station via a PUCCH. The method comprises determining that the wireless device has been assigned a first PUCCH resource for transmitting HARQ feedback. The first PUCCH resource is assigned from a plurality of PUCCH resources that are grouped into sets. The method further comprises changing from the first PUCCH resource to a second PUCCH resource, based on a size of a payload that the wireless device is preparing to send. The second PUCCH resource belongs to the same set as the first PUCCH resource and wherein the second PUCCH resource has a larger or smaller payload capacity than the first PUCCH resource. The method continues with transmitting the HARQ feedback to the base station via the second PUCCH resource. In some embodiments, the HARQ feedback transmitted via the second PUCCH resource comprises HARQ feedback originally intended to be transmitted on the first PUCCH and HARQ feedback intended to be transmitted on the second PUCCH resource.

According to certain embodiments, a wireless device is disclosed. The wireless device comprises power supply circuitry configured to supply power to the wireless device and processing circuitry configured to transmit HARQ feedback to a base station via a PUCCH. For example, the processing circuitry is configured to determine that the wireless device has been assigned a first PUCCH resource for transmitting HARQ feedback. The first PUCCH resource is assigned from a plurality of PUCCH resources that are grouped into sets. The processing circuitry is further configured to change from the first PUCCH resource to a second PUCCH resource, based on a size of a payload that the wireless device is preparing to send. The second PUCCH resource belongs to the same set as the first PUCCH resource and wherein the second PUCCH resource has a larger or smaller payload capacity than the first PUCCH resource. The processing circuitry is further configured to transmit the HARQ feedback to the base station via the second PUCCH resource. In some embodiments, the HARQ feedback transmitted via the second PUCCH resource comprise HARQ feedback originally intended to be transmitted on the first PUCCH and HARQ feedback intended to be transmitted on the second PUCCH resource.

Certain embodiments of the above-described wireless device and method performed therein may include one or more additional features. For example, in certain embodiments, the plurality of PUCCH resources are grouped implicitly. In other embodiments, the plurality of PUCCH resources are grouped explicitly. In some embodiments, the plurality of PUCCH resources are grouped according to a default grouping. In some embodiments, the plurality of PUCCH resources are grouped according to a set index. In some embodiments, the first PUCCH resource belongs to multiple sets of PUCCH resources and the second PUCCH resource belongs to the same set as the first PUCCH resource if the second PUCCH belongs to at least one of the multiple sets. In some embodiments, a payload capacity of the first PUCCH resource is smaller than a payload capacity of the second PUCCH resource. In other embodiments, the payload capacity of the first PUCCH resource is larger than a payload capacity of the second PUCCH resource. In some embodiments, the first PUCCH resource and the second PUCCH resource at least partially overlap in the time domain.

Certain embodiments may provide one or more of the following technical advantage(s). For example, according to certain embodiments, a scheduler can change (and by that adopt) the PUCCH resource a UE should use during the course of multiple scheduling. This eases the requirement for the gNB (the base station in NR) to make very accurate predictions on required PUCCH resource (UCI or ACK/NACK payload size) since the gNB can dynamically change the assigned PUCCH resource.

### BRIEF DESCRIPTION

Figure 1 illustrates an example of a downlink assignment index.
Figure 2 illustrates an example of a wireless device configured with long and short PUCCH formats.
Figure 3 illustrates an example of an association between a Physical Downlink Control Channel (PDCCH) and a PUCCH that may be used for HARQ feedback.
Figure 4 illustrates an example of a wireless device configured with long and short PUCCH formats, in accordance with some embodiments.
Figure 5 illustrates an example of an association between a PDCCH and a PUCCH that may be used for HARQ feedback, in accordance with some embodiments,
Figure QQ1 illustrates an example of a wireless network, in accordance with some embodiments.
Figure QQ2 illustrates an example of User Equipment, in accordance with some embodiments.
Figure QQ3 illustrates an example of a virtualization environment, in accordance with some embodiments.
Figure QQ4 illustrates an example of a telecommunication network connected via an intermediate network to a host computer, in accordance with some embodiments,
Figure QQ5 illustrates an example of a host computer communicating via a base station with a user equipment over a partially wireless connection, in accordance with some embodiments.
Figure QQ6 illustrates an example of methods implemented in a communication system including a host computer, a base station and a user equipment, in accordance with some embodiments.
Figure QQ7 illustrates an example of methods implemented in a communication system including a host computer, a base station and a user equipment, in accordance with some embodiments.
Figure QQ8 illustrates an example of methods implemented in a communication system including a host computer, a base station and a user equipment, in accordance with some embodiments.
Figure QQ9 illustrates an example of methods implemented in a communication system including a host computer, a base station and a user equipment, in accordance with some embodiments.
Figure VV0 illustrates an example of methods in accordance with some embodiments.
Figure VV1 illustrates an example of methods in accordance with some embodiments.
Figure WW illustrates an example of a virtualization apparatus, in accordance with some embodiments.

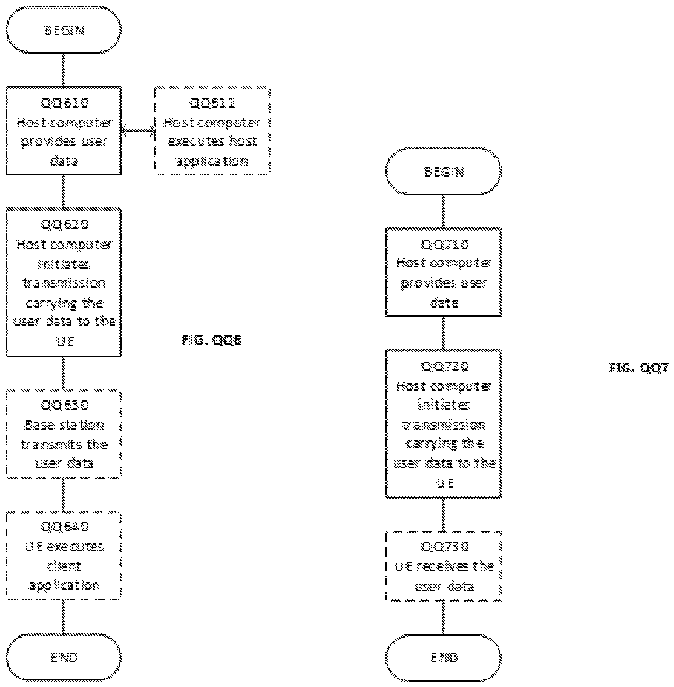

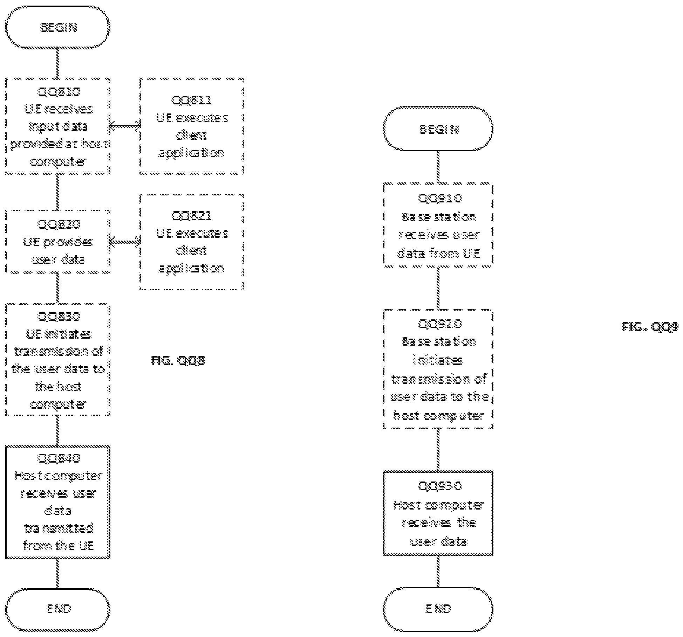

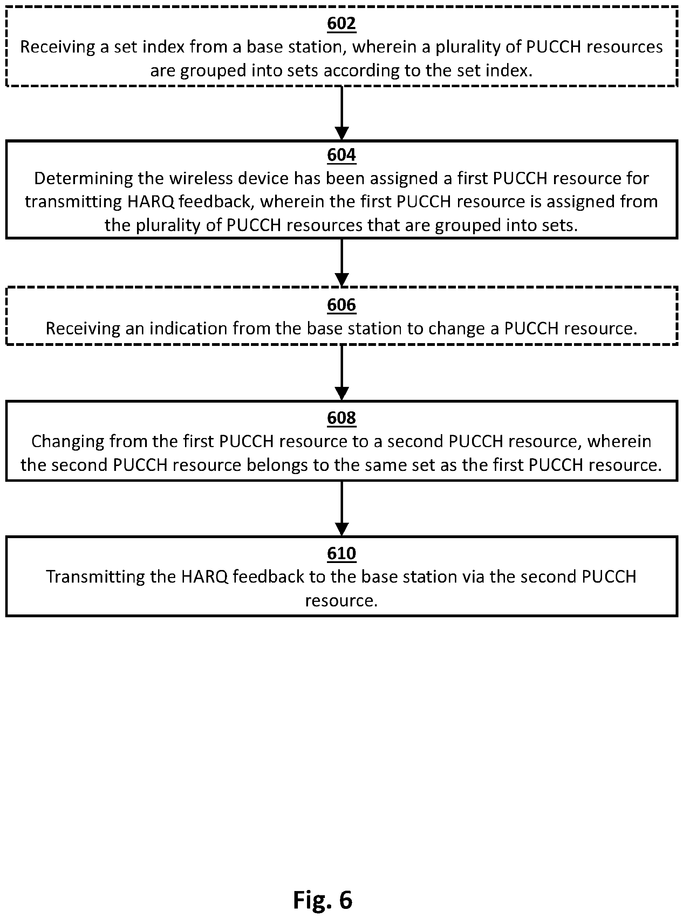

Figure 6 illustrates an example of a method performed by a wireless device for transmitting HARQ feedback to a base station via a PUCCH, in accordance with certain embodiments.

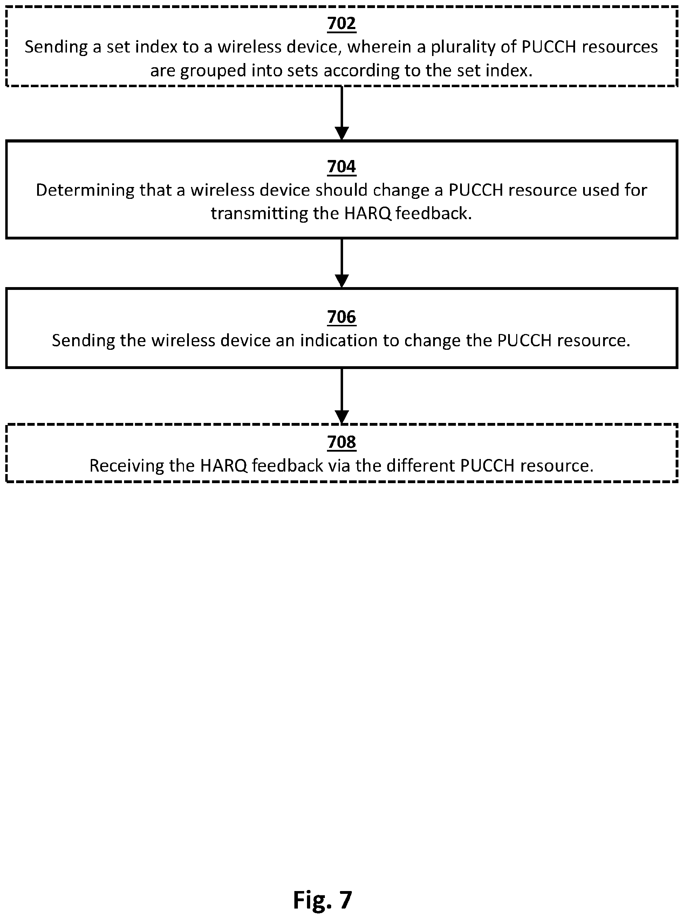

Figure 7 illustrates an example of a method performed by a base station for scheduling HARQ feedback via a PUCCH, in accordance with certain embodiments.

### DETAILED DESCRIPTION

Some of the embodiments contemplated herein will now be described more fully with reference to the accompanying drawings. Other embodiments, however, are contained within the scope of the appended claims, the disclosed subject matter should not be construed as limited to only the embodiments set forth herein; rather, these embodiments are provided by way of example to convey the scope of the subject matter to those skilled in the art.

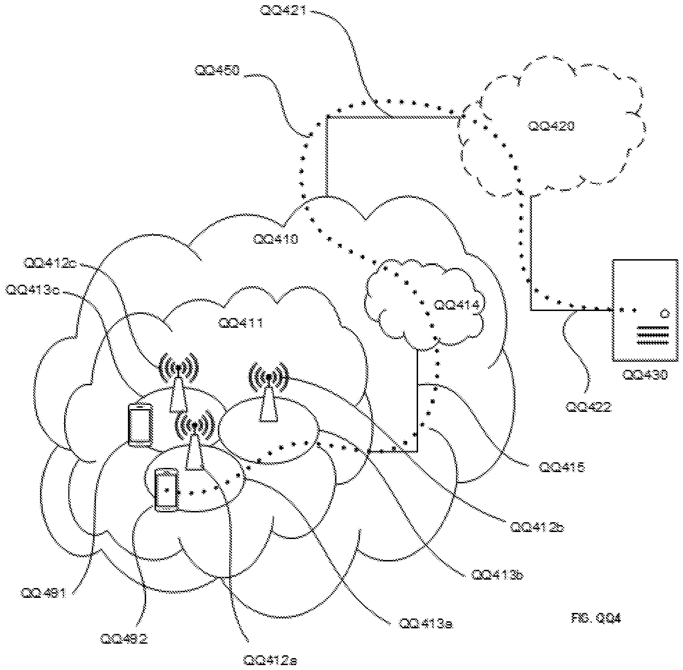

According to certain embodiments, the PUCCH resources that are configured for a UE are grouped into different sets. Figure 4 illustrates an example in which a UE is configured with multiple long and short PUCCH resources that have been grouped. How the grouping can be achieved is further discussed below and, for the moment, it does not matter how this grouping has been achieved. As can be seen, Figure 4 is based on the Figure 2, with the amendment that PUCCH formats PR1, PR2, PR6, and PR7 are grouped in the same set S0. The other PUCCH resources can belong to other PUCCH sets (not shown) and even PR1 and/or PR2 and/or PR6 and/or PR7 can be members of other sets (not shown). That is, one PUCCH resource can be a member in multiple sets. In Figure 4, PUCCH resource PR4 is illustrated as slightly outside to indicate that it overlaps PR2 and PR6. PR1 is a short PUCCH resource for ≤2 bit and PR2 is a short PUCCH resource for >2 bit.

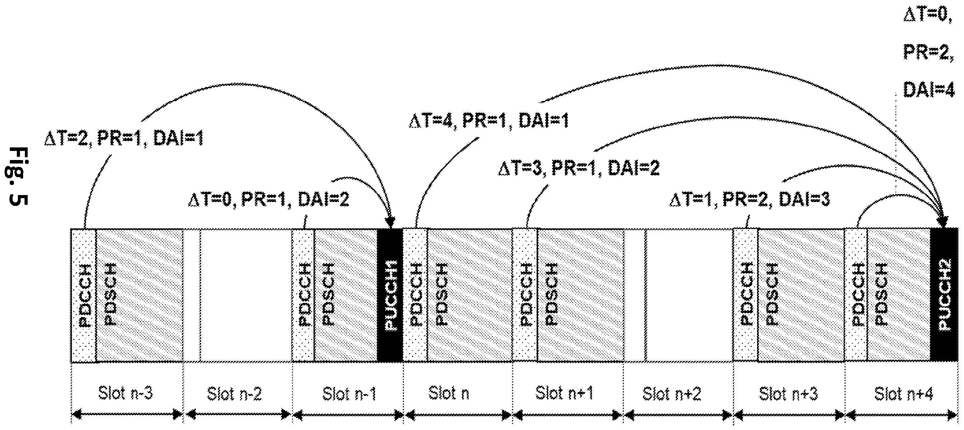

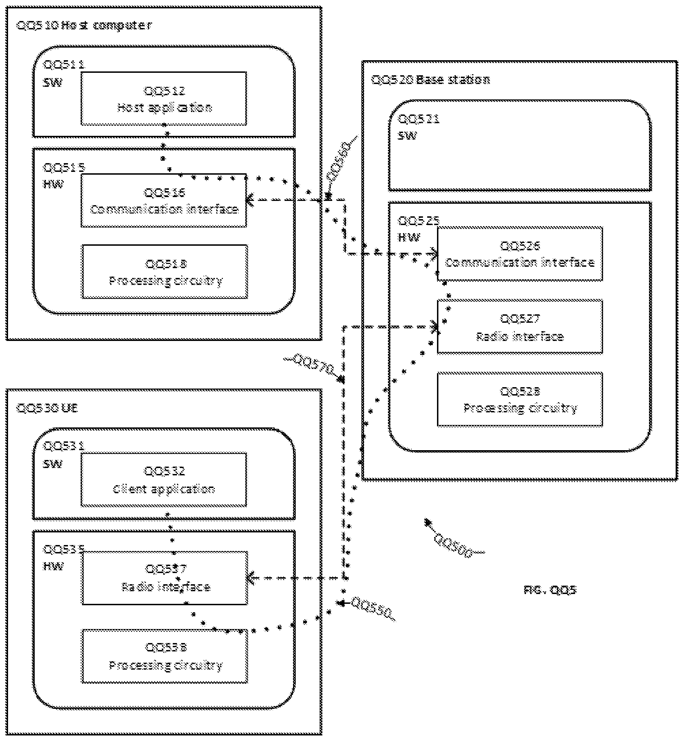

Figure 5 illustrates an example of an association between a PDCCH and a PUCCH that may be used for HARQ feedback, in accordance with some embodiments. Figure 5 is similar to Figure 3, with the exception of different PUCCH resources. In Figure 5, slots n and n+1 indicate short PUCCH resource PR1 (≤2 bit), while slots n+3 onward indicate PUCCH format PR2 (>2 bit) because there are already 3 DL assignments (from slot n, n+1, and n+3) that need to be acknowledged. Even though the example of Figure 5 switches between short PUCCH formats, the switching does not need to be confined to switching within short (or long) PUCCH formats. That is, certain embodiments can also switch between PUCCH resources of different lengths.

### Grouping of PUCCH resources

Certain embodiments may group PUCCH resources according to configuration, time position, and/or PUCCH payload, as further described below.
**Configuration:** As part of PUCCH resource configuration, a set index can be provided to indicate one or more sets to which a PUCCH resource belongs. If not provided, the PUCCH resource belongs to none or a default set. Note, a PUCCH resource can also belong to multiple sets.
**Time position.** Examples are as follows:
   - PUCCH resources that (at least partly) overlap in time-domain belong to the same group.
   - All PUCCH within the same slot are within one set, i.e., all PUCCH resources within a slot can be exchanged. More generally, all PUCCH resources within a configured time interval (e.g., first N symbols in a slot, symbols n0...n0+N-1 in a slot, etc.) belong to the same PUCCH set. The time range could require that the complete PUCCH is within the provided time range or only the starting or ending position.
   - Long PUCCH formats but with different starting positions. Depending on UE processing capability, a UE might be able to transmit HARQ feedback from the previous slot in the current slot if PUCCH does not start at the slot beginning but a few symbols later in the slot. If a gNB originally intended not to schedule a DL in the slot before the PUCCH slot, it could indicate a long PUCCH starting early in the UL slot. If the last DL slot before the UL slot is then also scheduled the original PUCCH resource does not work, in this case the last DL assignment could indicate a long PUCCH format with a later starting position in the slot.
   - Short PUCCH formats at different positions within a slot. Same motivation as the bullet above.
**PUCCH payload.** Examples are as follows:
   - Multiple/all PUCCH resources of the same format but with different configured payloads.
   - A short PUCCH with ≤2 bit is in the same set as a short PUCCH with >2 bit. This is illustrated in Figure 5 (PR1 and PR2 belong to S0).
   - A long PUCCH with ≤2 bit is in the same set as a long PUCCH with >2 bit.
   - A short PUCCH with ≤2 is in the same set as a long PUCCH with >2 bit.
   - PUCCH resources irrespective of format are in the same set if they are in the same slot and in subsequent DL assignments the payload capacity of the indicated PUCCH resource increases (or increases or remains constant). For example, DL assignments in slots n and n+1 indicate PR1 in slot m with payload capability PL1. DL assignment in slot n+4 indicates PR2 in slot m with payload PL2. PL2>PL1. In this case the UE determines that PUCCH resource PR2 in slot m is to be used instead of PR1 in slot m. Using this rule, the gNB can in the beginning indicate a PUCCH resource with small payload and subsequently switch to PUCCH resources with larger payload capability as the number of DL assignments that should use the same PUCCH resource increases.
   - Same rule as above with decreasing PUCCH payloads. Here the gNB would first indicate a large PUCCH format and - once it is clear that such a big format is not needed - indicate a smaller PUCCH resource.

Above is just a list of possible examples how to group PUCCH automatically or via configuration into sets. Also, combinations of examples can be envisioned.

Although the subject matter described herein may be implemented in any appropriate type of system using any suitable components, the embodiments disclosed herein are described in relation to a wireless network, such as the example wireless network illustrated in Figure QQ1. For simplicity, the wireless network of Figure QQ1 only depicts network QQ106, network nodes QQ160 and QQ160b, and WDs QQ110, QQ110b, and QQ110c. In practice, a wireless network may further include any additional elements suitable to support communication between wireless devices or between a wireless device and another communication device, such as a landline telephone, a service provider, or any other network node or end device. Of the illustrated components, network node QQ160 and wireless device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node QQ160 and WD QQ110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., Mobile Switching Centers (MSCs), Mobility Management Entities (MMEs)), Operation and Maintenance (O&M) nodes, Operations Support System (OSS) nodes, Self-Optimized Network (SON) nodes, positioning nodes (e.g., Evolved-Serving Mobile Location Centres (E-SMLCs)), and/or minimization of drive tests (MDTs) nodes. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure QQ1, network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of Figure QQ1 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium QQ180 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, Wide Code Division Multiplexing Access (WCDMA), LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed herein. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband processing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units

In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, interface QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and processing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, interface QQ190 may include one or more ports or terminals QQ194, radio front end circuitry QQ192, and RF transceiver circuitry QQ172, as part of a radio unit (not shown), and interface QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ190 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless device, another network node and/or any other network equipment.

Power circuitry QQ187 may comprise, or be coupled to, power management circuitry and is configured to supply the components of network node QQ160 with power for performing the functionality described herein. Power circuitry QQ187 may receive power from power source QQ186. Power source QQ186 and/or power circuitry QQ187 may be configured to provide power to the various components of network node QQ160 in a form suitable for the respective components (e.g., at a voltage and current level needed for each respective component). Power source QQ186 may either be included in, or external to, power circuitry QQ187 and/or network node QQ160. For example, network node QQ160 may be connectable to an external power source (e.g., an electricity outlet) via an input circuitry or interface such as an electrical cable, whereby the external power source supplies power to power circuitry QQ187. As a further example, power source QQ186 may comprise a source of power in the form of a battery or battery pack which is connected to, or integrated in, power circuitry QQ187. The battery may provide backup power should the external power source fail. Other types of power sources, such as photovoltaic devices, may also be used.

Alternative embodiments of network node QQ160 may include additional components beyond those shown in Figure QQ1 that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3rd Generation Partnership Project (3GPP) standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g., refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device QQ110 includes antenna QQ111, interface QQ114, processing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110.

Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ114 is connected to antenna QQ111 and processing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to processing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For example, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being performed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD. These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated.

User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, devices and circuits, and output interfaces, devices and circuits. User interface equipment QQ132 is configured to allow input of information into WD QQ110, and is connected to processing circuitry QQ120 to allow processing circuitry QQ120 to process the input information. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, converting, or other modification to the power from power source QQ136 to make the power suitable for the respective components of WD QQ110 to which power is supplied.

Figure QQ2 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE QQ2200 may be any UE identified by the 3^{rd} Generation Partnership Project (3GPP), including a NB-loT UE, a machine type communication (MTC) UE, and/or an enhanced MTC (eMTC) UE. UE QQ200, as illustrated in Figure QQ2, is one example of a WD configured for communication in accordance with one or more communication standards promulgated by the 3^{rd} Generation Partnership Project (3GPP), such as 3GPP's GSM, Universal Mobile Telecommunication System (UMTS), LTE, and/or 5th Generation (5G) standards. As mentioned previously, the term WD and UE may be used interchangeable. Accordingly, although Figure QQ2 is a UE, the components discussed herein are equally applicable to a WD, and vice-versa.

In Figure QQ2, UE QQ200 includes processing circuitry QQ201 that is operatively coupled to input/output interface QQ205, radio frequency (RF) interface QQ209, network connection interface QQ211, memory QQ215 including random access memory (RAM) QQ217, read-only memory (ROM) QQ219, and storage medium QQ221 or the like, communication subsystem QQ231, power source QQ233, and/or any other component, or any combination thereof. Storage medium QQ221 includes operating system QQ223, application program QQ225, and data QQ227. In other embodiments, storage medium QQ221 may include other similar types of information. Certain UEs may utilize all of the components shown in Figure QQ2, or only a subset of the components. The level of integration between the components may vary from one UE to another UE. Further, certain UEs may contain multiple instances of a component, such as multiple processors, memories, transceivers, transmitters, receivers, etc.

In Figure QQ2, processing circuitry QQ201 may be configured to process computer instructions and data. Processing circuitry QQ201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry QQ201 may include two central processing units (CPUs). Data may be information in a form suitable for use by a computer.

In the depicted embodiment, input/output interface QQ205 may be configured to provide a communication interface to an input device, output device, or input and output device UE QQ200 may be configured to use an output device via input/output interface QQ205. An output device may use the same type of interface port as an input device. For example, a USB port may be used to provide input to and output from UE QQ200. The output device may be a speaker, a sound card, a video card, a display, a monitor, a printer, an actuator, an emitter, a smartcard, another output device, or any combination thereof. UE QQ200 may be configured to use an input device via input/output interface QQ205 to allow a user to capture information into UE QQ200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure QQ2, RF interface QQ209 may be configured to provide a communication interface to RF components such as a transmitter, a receiver, and an antenna. Network connection interface QQ211 may be configured to provide a communication interface to network QQ243a. Network QQ243a may encompass wired and/or wireless networks such as a local-area network (LAN), a wide-area network (WAN), a computer network, a wireless network, a telecommunications network, another like network or any combination thereof. For example, network QQ243a may comprise a Wi-Fi network. Network connection interface QQ211 may be configured to include a receiver and a transmitter interface used to communicate with one or more other devices over a communication network according to one or more communication protocols, such as Ethernet, TCP/IP, SONET, ATM, or the like. Network connection interface QQ211 may implement receiver and transmitter functionality appropriate to the communication network links (e.g., optical, electrical, and the like). The transmitter and receiver functions may share circuit components, software or firmware, or alternatively may be implemented separately.

RAM QQ217 may be configured to interface via bus QQ202 to processing circuitry QQ201 to provide storage or caching of data or computer instructions during the execution of software programs such as the operating system, application programs, and device drivers. ROM QQ219 may be configured to provide computer instructions or data to processing circuitry QQ201. For example, ROM QQ219 may be configured to store invariant low-level system code or data for basic system functions such as basic input and output (I/O), startup, or reception of keystrokes from a keyboard that are stored in a non-volatile memory. Storage medium QQ221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium QQ221 may be configured to include operating system QQ223, application program QQ225 such as a web browser application, a widget or gadget engine or another application, and data file QQ227. Storage medium QQ221 may store, for use by UE QQ200, any of a variety of various operating systems or combinations of operating systems.

Storage medium QQ221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium QQ221 may allow UE QQ200 to access computer-executable instructions, application programs or the like, stored on transitory or non-transitory memory media, to off-load data, or to upload data. An article of manufacture, such as one utilizing a communication system may be tangibly embodied in storage medium QQ221, which may comprise a device readable medium.

In Figure QQ2, processing circuitry QQ201 may be configured to communicate with network QQ243b using communication subsystem QQ231. Network QQ243a and network QQ243b may be the same network or networks or different network or networks. Communication subsystem QQ231 may be configured to include one or more transceivers used to communicate with network QQ243b. For example, communication subsystem QQ231 may be configured to include one or more transceivers used to communicate with one or more remote transceivers of another device capable of wireless communication such as another WD, UE, or base station of a radio access network (RAN) according to one or more communication protocols, such as IEEE 802.QQ2, CDMA, WCDMA, GSM, LTE, Universal Terrestrial Radio Access Network (UTRAN), WiMax, or the like. Each transceiver may include transmitter QQ233 and/or receiver QQ235 to implement transmitter or receiver functionality, respectively, appropriate to the RAN links (e.g., frequency allocations and the like). Further, transmitter QQ233 and receiver QQ235 of each transceiver may share circuit components, software or firmware, or alternatively may be implemented separately.

In the illustrated embodiment, the communication functions of communication subsystem QQ231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem QQ231 may include cellular communication, Wi-Fi communication, Bluetooth communication, and GPS communication. Network QQ243b may encompass wired and/or wireless networks such as a local-area network (LAN), a wide-area network (WAN), a computer network, a wireless network, a telecommunications network, another like network or any combination thereof. For example, network QQ243b may be a cellular network, a Wi-Fi network, and/or a near-field network. Power source QQ213 may be configured to provide alternating current (AC) or direct current (DC) power to components of UE QQ200.

The features, benefits and/or functions described herein may be implemented in one of the components of UE QQ200 or partitioned across multiple components of UE QQ200. Further, the features, benefits, and/or functions described herein may be implemented in any combination of hardware, software or firmware. In one example, communication subsystem QQ231 may be configured to include any of the components described herein. Further, processing circuitry QQ201 may be configured to communicate with any of such components over bus QQ202. In another example, any of such components may be represented by program instructions stored in memory that when executed by processing circuitry QQ201 perform the corresponding functions described herein. In another example, the functionality of any of such components may be partitioned between processing circuitry QQ201 and communication subsystem QQ231. In another example, the non-computationally intensive functions of any of such components may be implemented in software or firmware and the computationally intensive functions may be implemented in hardware.

Figure QQ3 is a schematic block diagram illustrating a virtualization environment QQ300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments QQ300 hosted by one or more of hardware nodes QQ330. Further, in embodiments in which the virtual node is not a radio access node or does not require radio connectivity (e.g., a core network node), then the network node may be entirely virtualized.

The functions may be implemented by one or more applications QQ320 (which may alternatively be called software instances, virtual appliances, network functions, virtual nodes, virtual network functions, etc.) operative to implement some of the features, functions, and/or benefits of some of the embodiments disclosed herein. Applications QQ320 are run in virtualization environment QQ300 which provides hardware QQ330 comprising processing circuitry QQ360 and memory QQ390. Memory QQ390 contains instructions QQ395 executable by processing circuitry QQ360 whereby application QQ320 is operative to provide one or more of the features, benefits, and/or functions disclosed herein.

Virtualization environment QQ300, comprises general-purpose or special-purpose network hardware devices QQ330 comprising a set of one or more processors or processing circuitry QQ360, which may be commercial off-the-shelf (COTS) processors, dedicated Application Specific Integrated Circuits (ASICs), or any other type of processing circuitry including digital or analog hardware components or special purpose processors. Each hardware device may comprise memory QQ390-1 which may be non-persistent memory for temporarily storing instructions QQ395 or software executed by processing circuitry QQ360. Each hardware device may comprise one or more network interface controllers (NICs) QQ370, also known as network interface cards, which include physical network interface QQ380. Each hardware device may also include non-transitory, persistent, machine-readable storage media QQ390-2 having stored therein software QQ395 and/or instructions executable by processing circuitry QQ360. Software QQ395 may include any type of software including software for instantiating one or more virtualization layers QQ350 (also referred to as hypervisors), software to execute virtual machines QQ340 as well as software allowing it to execute functions, features and/or benefits described in relation with some embodiments described herein.

Virtual machines QQ340, comprise virtual processing, virtual memory, virtual networking or interface and virtual storage, and may be run by a corresponding virtualization layer QQ350 or hypervisor. Different embodiments of the instance of virtual appliance QQ320 may be implemented on one or more of virtual machines QQ340, and the implementations may be made in different ways.

During operation, processing circuitry QQ360 executes software QQ395 to instantiate the hypervisor or virtualization layer QQ350, which may sometimes be referred to as a virtual machine monitor (VMM). Virtualization layer QQ350 may present a virtual operating platform that appears like networking hardware to virtual machine QQ340.

As shown in Figure QQ3, hardware QQ330 may be a standalone network node with generic or specific components. Hardware QQ330 may comprise antenna QQ3225 and may implement some functions via virtualization. Alternatively, hardware QQ330 may be part of a larger cluster of hardware (e.g., such as in a data center or customer premise equipment (CPE)) where many hardware nodes work together and are managed via management and orchestration (MANO) QQ3100, which, among others, oversees lifecycle management of applications QQ320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine QQ340 may be a software implementation of a physical machine that runs programs as if they were executing on a physical, non-virtualized machine. Each of virtual machines QQ340, and that part of hardware QQ330 that executes that virtual machine, be it hardware dedicated to that virtual machine and/or hardware shared by that virtual machine with others of the virtual machines QQ340, forms a separate virtual network elements (VNE).

Still in the context of NFV, Virtual Network Function (VNF) is responsible for handling specific network functions that run in one or more virtual machines QQ340 on top of hardware networking infrastructure QQ330 and corresponds to application QQ320 in Figure QQ3.

In some embodiments, one or more radio units QQ3200 that each include one or more transmitters QQ3220 and one or more receivers QQ3210 may be coupled to one or more antennas QQ3225. Radio units QQ3200 may communicate directly with hardware nodes QQ330 via one or more appropriate network interfaces and may be used in combination with the virtual components to provide a virtual node with radio capabilities, such as a radio access node or a base station.

In some embodiments, some signalling can be effected with the use of control system QQ3230 which may alternatively be used for communication between the hardware nodes QQ330 and radio units QQ3200.

With reference to Figure QQ4, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure QQ4 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

Example implementations, in accordance with an embodiment, of the UE, base station and host computer discussed in the preceding paragraphs will now be described with reference to Figure QQ5. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure QQ5) served by base station QQ520. Communication interface QQ526 may be configured to facilitate connection QQ560 to host computer QQ510. Connection QQ560 may be direct or it may pass through a core network (not shown in Figure QQ5) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure QQ5 may be similar or identical to host computer QQ430, one of base stations QQ412a, QQ412b, QQ412c and one of UEs QQ491, QQ492 of Figure QQ4, respectively. This is to say, the inner workings of these entities may be as shown in Figure QQ5 and independently, the surrounding network topology may be that of Figure QQ4.

In Figure QQ5, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments improve the performance of OTT services provided to UE QQ530 using OTT connection QQ550, in which wireless connection QQ570 forms the last segment. More precisely, the teachings of these embodiments may improve the scheduling of HARQ feedback on the uplink and thereby provide benefits such as reduced user waiting time with respect to data transmitted on the downlink.

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

Figure QQ6 is a flowchart illustrating a method implemented in a communication system, in accordance with one embodiment. The communication system includes a host computer, a base station and a UE which may be those described with reference to Figures QQ4 and QQ5. For simplicity of the present disclosure, only drawing references to Figure QQ6 will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

Figure QQ7 is a flowchart illustrating a method implemented in a communication system, in accordance with one embodiment. The communication system includes a host computer, a base station and a UE which may be those described with reference to Figures QQ4 and QQ5. For simplicity of the present disclosure, only drawing references to Figure QQ7 will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

Figure QQ8 is a flowchart illustrating a method implemented in a communication system, in accordance with one embodiment. The communication system includes a host computer, a base station and a UE which may be those described with reference to Figures QQ4 and QQ5. For simplicity of the present disclosure, only drawing references to Figure QQ8 will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

Figure QQ9 is a flowchart illustrating a method implemented in a communication system, in accordance with one embodiment. The communication system includes a host computer, a base station and a UE which may be those described with reference to Figures QQ4 and QQ5. For simplicity of the present disclosure, only drawing references to Figure QQ9 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

Figure VV0 depicts a method for use in a wireless device, in accordance with particular embodiments. The method begins at step VV02 with receiving an indication from a base station to change a PUCCH resource that the wireless device uses for transmitting HARQ feedback. The method proceeds to step VV04 with changing the PUCCH resource. The method ends with transmitting the HARQ feedback originally intended to be transmitted on the original PUCCH resource on the new PUCCH resource, together with HARQ feedback intended to be transmitted on the new PUCCH resource at step VV06.

Figure W1 depicts a method for use in a base station, in accordance with particular embodiments. The method begins at step VV12 with determining, during the course of multiple scheduling, that a wireless device should change a PUCCH resource that the wireless device uses for transmitting HARQ feedback. The method proceeds to step VV14 with sending an indication to the wireless device, wherein the indication indicates that the wireless device should change the PUCCH resource. The method ends with receiving the HARQ feedback originally intended to be transmitted on the original PUCCH resource on the new PUCCH resource, together with HARQ feedback intended to be transmitted on the new PUCCH resource at step W16.

Figure WW illustrates a schematic block diagram of an apparatus WW00 in a wireless network (for example, the wireless network shown in Figure QQ1). The apparatus may be implemented in a wireless device or network node (e.g., wireless device QQ110 or network node QQ160 shown in Figure QQ1). Apparatus WW00 is operable to carry out the example method described with reference to Figure VV0 or VV1 and possibly any other processes or methods disclosed herein. It is also to be understood that the method of Figure VV0 or W1 is not necessarily carried out solely by apparatus WW00. At least some operations of the method can be performed by one or more other entities.

Virtual Apparatus WW00 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause uplink configuration unit WW02, HARQ feedback unit WW04, and any other suitable units of apparatus WW00 to perform corresponding functions according one or more embodiments of the present disclosure.

As illustrated in Figure WW, apparatus WW00 includes uplink configuration unit WW02 and HARQ feedback unit WW04. In certain embodiments, such as when uplink configuration unit WW02 and HARQ feedback unit are implemented in a wireless device, uplink configuration unit WW02 is configured to receive an indication from a base station to change a PUCCH resource that the wireless device uses for transmitting HARQ feedback. In response to receiving the indication, uplink configuration unit WW02 is further configured to change the PUCCH resource. HARQ feedback unit WW04 is configured to transmit the HARQ feedback originally intended to be transmitted on the original PUCCH resource on the new PUCCH resource, together with HARQ feedback intended to be transmitted on the new PUCCH resource.

In certain embodiments, such as when uplink configuration unit WW02 and HARQ feedback unit are implemented in a base station, uplink configuration unit WW02 is configured determine, during the course of multiple scheduling, that a wireless device should change a PUCCH resource that the wireless device uses for transmitting HARQ feedback. In response to the determination, uplink configuration unit WW02 is further configured to send an indication to the wireless device, wherein the indication indicates that the wireless device should change the PUCCH resource. HARQ feedback unit WW04 is configured to receive the HARQ feedback originally intended to be transmitted on the original PUCCH resource on the new PUCCH resource, together with HARQ feedback intended to be transmitted on the new PUCCH resource.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Figure 6 illustrates an example of a method performed by a wireless device, such as wireless device QQ110 discussed above, in accordance with certain embodiments. In some embodiments, the method may begin at step 602 with receiving a set index from a base station. The set index indicates set information for a plurality of PUCCH resources that are grouped into sets. See "Grouping of PUCCH resources" above for examples of how PUCCH resources may be grouped. At step 604, the method determines that the wireless device has been assigned a first PUCCH resource for transmitting HARQ feedback. The first PUCCH resource is assigned from the plurality of PUCCH resources that are grouped into sets.

In some examples not falling within the scope of the claims, the method includes step 606 in which an indication is received from the base station to change a PUCCH resource. The method proceeds to step 608 with changing from the first PUCCH resource to a second PUCCH resource in the same set as the first PUCCH. The wireless device determines to change to a second PUCCH having a larger or smaller payload capacity than the first PUCCH depending on the size of the payload that the wireless device is preparing to send.

As discussed above, the second PUCCH belongs to the same set as the first PUCCH resource. If the first PUCCH resource belongs to multiple sets (e.g., X, Y, and Z), the second PUCCH resource may be considered to belong to the same set as the first PUCCH resource if the second PUCCH resource belongs to at least one of the multiple sets (e.g., X and/or Y and/or Z). In certain embodiments (e.g., embodiments that include step 602), the second PUCCH may be determined to belong to the same set based on the set index received from the base station in step 602. Other embodiments may determine the grouping based on default grouping or other information obtained either explicitly or implicitly by the wireless device.

At step 610, the method proceeds with transmitting the HARQ feedback to the base station via the second PUCCH resource. The HARQ feedback may include HARQ feedback originally intended for the first PUCCH resource together with HARQ feedback intended for the second PUCCH resource.

Figure 7 illustrates an example of a method performed by a base station, such as base station QQ160 discussed above, in accordance with an example not falling within the scope of the claims. In some embodiments, the method may begin at step 702 with sending a set index to a wireless device. The set index indicates set information for a plurality of PUCCH resources that are grouped into sets. See "Grouping of PUCCH resources" above for examples of how PUCCH resources may be grouped. As discussed above with respect to Figure 6, in other embodiments the wireless device may obtain grouping information in another manner (such as based on default grouping), in which case the base station need not send a set index and step 702 may be omitted. At step 704, the method determines that the wireless device should change a PUCCH resource used for transmitting the HARQ feedback. At step 706, the method sends the wireless device an indication to change the PUCCH resource. The indication prompts the wireless device to change to another PUCCH resource in the same set as the original PUCCH resource (see e.g., step 608 of Figure 6). In some embodiments, the method may include receiving HARQ feedback via the different PUCCH resource at step 708. The HARQ feedback may include HARQ feedback originally intended for the original PUCCH resource together with HARQ feedback intended for the new PUCCH resource.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

## Claims

1. A method performed by a wireless device for transmitting Hybrid Automatic Repeat Request, HARQ, feedback to a base station via a Physical Uplink Control Channel, PUCCH, the method comprising:
determining (604) that the wireless device has been assigned a first PUCCH resource for transmitting HARQ feedback, wherein the first PUCCH resource is assigned from a plurality of PUCCH resources that are grouped into sets;
changing (608), based on a size of a payload that the wireless device is preparing to send, from the first PUCCH resource to a second PUCCH resource, wherein the second PUCCH resource belongs to the same set as the first PUCCH resource, and wherein the second PUCCH resource has a larger or smaller payload capacity than the first PUCCH resource; and
transmitting (610) the HARQ feedback to the base station via the second PUCCH resource.

2. A wireless device (QQ110) for transmitting Hybrid Automatic Repeat Request, HARQ, feedback to a base station via a Physical Uplink Control Channel, PUCCH, the wireless device comprising:
power supply circuitry (QQ137) configured to supply power to the wireless device; and
processing circuitry (QQ120) configured to:
determine, that the wireless device has been assigned a first PUCCH resource for transmitting HARQ feedback, wherein the first PUCCH resource is assigned from a plurality of PUCCH resources that are grouped into sets;
change based on a size of a payload that the wireless device is preparing to send, from the first PUCCH resource to a second PUCCH resource, wherein the second PUCCH resource belongs to the same set as the first PUCCH resource, and wherein the second PUCCH resource has a larger or smaller payload capacity than the first PUCCH resource; and
transmit the HARQ feedback to the base station via the second PUCCH resource.

3. The wireless device of Claim 2, wherein the plurality of PUCCH resources are grouped implicitly.

4. The wireless device of Claim 2, wherein the plurality of PUCCH resources are grouped explicitly.

5. The wireless device of Claim 2, the processing circuitry further configured to;
receive a set index from the base station, wherein the plurality of PUCCH resources are grouped according to the set index.

6. The wireless device of Claim 2, wherein the plurality of PUCCH resources are grouped according to a default grouping.

7. The wireless device of any of Claims 2-6, wherein the first PUCCH resource belongs to multiple sets of PUCCH resources and the second PUCCH resource belongs to at least one of the multiple sets.

8. The wireless device of any of Claims 2-7, wherein to transmit the HARQ feedback to the base station, the processing circuitry is configured to transmit HARQ feedback originally intended to be transmitted on the first PUCCH resource on the second PUCCH resource, together with HARQ feedback intended to be transmitted on the second PUCCH resource.

9. The wireless device of any of Claims 2-8, wherein the first PUCCH resource and the second PUCCH resource at least partially overlap in the time domain.

## Patentansprüche

1. Verfahren, das von einer drahtlosen Vorrichtung durchgeführt wird, zur Übertragung von Rückmeldung bezüglich einer hybriden automatischen Wiederholungsanforderung, HARQ, über einen physikalischen Uplink-Steuerkanal, PUCCH, an eine Basisstation, wobei das Verfahren umfasst:
Bestimmen (604), dass der drahtlosen Vorrichtung eine erste PUCCH-Ressource zum Übertragen von HAR-Rückmeldung zugeordnet wurde, wobei die erste PUCCH-Ressource aus einer Mehrzahl von PUCCH-Ressourcen zugeordnet wurde, die in Sätze gruppiert ist;
Wechseln (608) von der ersten PUCCH-Ressource zu einer zweiten PUCCH-Ressource basierend auf einer Größe einer Nutzlast, die die drahtlose Vorrichtung zum Senden vorbereitet, wobei die zweite PUCCH-Ressource zum gleichen Satz wie die erste PUCCH-Ressource gehört, und wobei die zweite PUCCH-Ressource eine größere oder kleiner Nutzlastkapazität als die erste PUCCH-Ressource aufweist; und
Übertragen (610) der HARQ-Rückmeldung über die zweite PUCCH-Ressource an die Basisstation.

2. Drahtlose Vorrichtung (QQ110) zum Übertragen von Rückmeldung bezüglich einer hybriden automatischen Wiederholungsanforderung, HARQ, über einen physikalischen Uplink-Steuerkanal, PUCCH, an eine Basisstation, wobei die drahtlose Vorrichtung umfasst:
Leistungsversorgungsschaltungsanordnung (QQ137), die zum Versorgen der drahtlosen Vorrichtung mit Leistung konfiguriert ist; und
Verarbeitungsschaltungsanordnung (QQ120), die konfiguriert ist zum:
Bestimmen, dass der drahtlosen Vorrichtung eine erste PUCCH-Ressource zum Übertragen von HAR-Rückmeldung zugeordnet wurde, wobei die erste PUCCH-Ressource aus einer Mehrzahl von PUCCH-Ressourcen zugeordnet wurde, die in Sätze gruppiert ist;
Wechseln von der ersten PUCCH-Ressource zu einer zweiten PUCCH-Ressource basierend auf einer Größe einer Nutzlast, die die drahtlose Vorrichtung zum Senden vorbereitet, wobei die zweite PUCCH-Ressource zum gleichen Satz wie die erste PUCCH-Ressource gehört, und wobei die zweite PUCCH-Ressource eine größere oder kleiner Nutzlastkapazität als die erste PUCCH-Ressource aufweist; und
Übertragen der HARQ-Rückmeldung über die zweite PUCCH-Ressource an die Basisstation.

3. Drahtlose Vorrichtung nach Anspruch 2, wobei die Mehrzahl von PUCCH-Ressourcen implizit gruppiert ist.

4. Drahtlose Vorrichtung nach Anspruch 2, wobei die Mehrzahl von PUCCH-Ressourcen explizit gruppiert ist.

5. Drahtlose Vorrichtung nach Anspruch 2, wobei die Verarbeitungsschaltungsanordnung ferner konfiguriert ist zum;
Empfangen eines Satzindexes von der Basisstation, wobei die Mehrzahl von PUCCH-Ressourcen gemäß dem Satzindex gruppiert ist.

6. Drahtlose Vorrichtung nach Anspruch 2, wobei die Mehrzahl von PUCCH-Ressourcen gemäß einer Standardgruppierung gruppiert ist.

7. Drahtlose Vorrichtung nach einem der Ansprüche 2 bis 6, wobei die erste PUCCH-Ressource zu mehreren Sätzen von PUCCH-Ressourcen gehört und die zweite PUCCH-Ressource zu mindestens einem der mehreren Sätze gehört.

8. Drahtlose Vorrichtung nach einem der Ansprüche 2 bis 7, wobei die Verarbeitungsschaltungsanordnung so konfiguriert ist, dass sie zum Übertragen der HARQ-Rückmeldung an die Basisstation die HARQ-Rückmeldung, die ursprünglich auf der ersten PUCCH-Ressource übertragen werden soll, zusammen mit der HARQ-Rückmeldung, die auf der zweiten PUCCH-Ressource gesendet werden soll, auf der zweiten PUCCH-Ressource überträgt.

9. Drahtlose Vorrichtung nach einem der Ansprüche 2 bis 8, wobei die erste PUCCH-Ressource und die zweite PUCCH-Ressource einander in der Zeitdomäne zumindest teilweise überlappen.

## Revendications

1. Procédé réalisé par un dispositif sans fil pour transmettre une rétroaction de demande de répétition automatique hybride, HARQ, à une station de base via un canal de commande de liaison montante physique, PUCCH, le procédé comprenant :
la détermination (604) qu'il a été attribué, au dispositif sans fil, une première ressource PUCCH pour transmettre une rétroaction HARQ, dans lequel la première ressource PUCCH est attribuée parmi une pluralité de ressources PUCCH qui sont regroupées dans des ensembles ;
le changement (608), sur la base d'une taille d'une charge utile que le dispositif sans fil se prépare à envoyer, de la première ressource PUCCH à la deuxième ressource PUCCH, dans lequel la deuxième ressource PUCCH appartient au même ensemble que la première ressource PUCCH, et dans lequel la deuxième ressource PUCCH présente une capacité de charge utile supérieure ou inférieure à celle de la première ressource PUCCH ; et
la transmission (610) de la rétroaction HARQ à la station de base via la deuxième ressource PUCCH.

2. Dispositif sans fil (QQ110) pour transmettre une rétroaction de demande de répétition automatique hybride, HARQ, à une station de base via un canal de commande de liaison montante physique, PUCCH, le dispositif sans fil comprenant :
une circuiterie d'alimentation en énergie (QQ137) configurée pour alimenter le dispositif sans fil en énergie ; et
une circuiterie de traitement (QQ120) configurée pour :
déterminer qu'il a été attribué, au dispositif sans fil, une première ressource PUCCH pour transmettre une rétroaction HARQ, dans lequel la première ressource PUCCH est attribuée parmi une pluralité de ressources PUCCH qui sont regroupées dans des ensembles ;
changer, sur la base d'une taille d'une charge utile que le dispositif sans fil se prépare à envoyer, de la première ressource PUCCH à la deuxième ressource PUCCH, dans lequel la deuxième ressource PUCCH appartient au même ensemble que la première ressource PUCCH, et dans lequel la deuxième ressource PUCCH présente une capacité de charge utile supérieure ou inférieure à celle de la première ressource PUCCH ; et
transmettre la rétroaction HARQ à la station de base via la deuxième ressource PUCCH.

3. Dispositif sans fil selon la revendication 2, dans lequel la pluralité de ressources PUCCH sont regroupées implicitement.

4. Dispositif sans fil selon la revendication 2, dans lequel la pluralité de ressources PUCCH sont regroupées explicitement.

5. Dispositif sans fil selon la revendication 2, dans lequel la circuiterie de traitement est en outre configurée pour :
recevoir un index d'ensembles depuis la station de base, dans lequel la pluralité de ressources PUCCH sont regroupées en fonction de l'index d'ensembles.

6. Dispositif sans fil selon la revendication 2, dans lequel la pluralité de ressources PUCCH sont regroupées selon un regroupement par défaut.

7. Dispositif sans fil selon l'une quelconque des revendications 2 à 6, dans lequel la première ressource PUCCH appartient à de multiples ensembles de ressources PUCCH et la deuxième ressource PUCCH appartient à au moins l'un des multiples ensembles.

8. Dispositif sans fil selon l'une quelconque des revendications 2 à 7, dans lequel, pour transmettre la rétroaction HARQ à la station de base, la circuiterie de traitement est configurée pour transmettre une rétroaction HARQ initialement destinée à être transmise sur la première ressource PUCCH sur la deuxième ressource PUCCH, avec une rétroaction HARQ destinée à être transmise sur la deuxième ressource PUCCH.

9. Dispositif sans fil selon l'une quelconque des revendications 2 à 8, dans lequel la première ressource PUCCH et la deuxième ressource PUCCH se chevauchent au moins partiellement dans le domaine temporel.
